# EUROPEAN PATENT APPLICATION

(11) **EP 2 124 386 A1**
(43) Date of publication of application: **25.11.2009**
(21) Application number: 08156828.9
(22) Date of filing: 23.05.2008
(51) Int. Cl.: H04L 12/18, H04W 88/08

(54) **Apparatus and method for multicast and/or broadcast service**

(71) Applicant: Nokia Siemens Networks Oy, 02610 Espoo (FI)
(72) Inventor: Paczek, Wojciech, 54-436 Wroclaw (PL); Tomeczko, Dariusz, 51-670 Wroclaw (PL)
(74) Representative: TBK-Patent

(57) **Abstract**

Embodiments provide a method and apparatus configured to provide or receive a broadcast or multicast service, wherein a base layer of content is broadcast or multicast in a broadcast or multicast mode using point-to-multipoint transmission, and an enhancement layer, allowing higher quality of the content reproduction than the base layer, may be provided in a point to point mode or together with base layer in a point to multipoint mode.

## Description

### FIELD OF TECHNOLOGY AND BACKGROUND

The invention generally relates to communication, data or content transmission, and network elements, methods, apparatuses, systems and programs of or for transmission and reception e.g. in mobile networks such as cellular networks.

Multimedia broadcast multicast service, MBMS, is a multicasting/broadcasting service that can be offered e.g. via existing systems such as global system for mobile communications, GSM, universal mobile telecommunications system, UMTS, or future long-term evolution, LTE, cellular networks. The MBMS Bearer Service includes a multicast and a broadcast mode and uses IP Multicast addresses for the IP flows. The advantage of the MBMS Bearer Service compared to e.g. legacy UMTS bearer services (interactive, streaming, etc.) is that the transmission resources in the core as well as access network are saved due to the fact that particular content is sent only once via the given link. One MBMS packet flow is replicated e.g. by gateway general packet radio service support node, GGSN, serving general packet radio service support node, SGSN, and radio network controller, RNCs, increasing the overall capacity of the system. MBMS may use an advanced counting scheme to decide, whether or not zero, one or more dedicated (i.e. point-to-point) radio channels lead to a more efficient system usage than one common (i.e. broadcast) radio channel e.g. in a case when the estimated number of users does not justify using point-to-multipoint mode.

Scalable video coding, SVC, codecs can be applicable in many cases e.g. Internet protocol television, IPTV, video-on-demand, wireless broadcasting/multicasting, surveillance applications, multi-party video conference, MPEG-21 DIA (Digital Item Adaptation) based adaptation etc. Generally, SVC codecs are useful if a video is transmitted over the network where propagation conditions are constantly changing or there is a need (or possibility) to introduction of layered content delivery due to e.g. charging aspects or different QoS parameters that can be satisfied in different areas where this content is transmitted (possibly using various access networks and various kinds of the end devices). Moreover their applications can be also related to storage functionalities (e.g. so called erosion storage).

Summarizing, SVC are applicable e.g. if bit rate, format or power adaptation is necessary. Graceful degradation, when the desired video stream is received only partially, is another important feature of SVC that can determine the area of its applicability as well. Scalable video coding, SVC, serves different needs of different users with different displays connected through different network links by using a single bit stream, i.e., a single coded version of the video content. For spatial scalability, appropriate resolution is chosen. Temporal scalability allows choosing convenient frame rate. Quality scalability enables choosing suitable data rate while frame rate as well as frame size is preserved.

MBMS is currently under evaluation by mobile network operators as a means of delivering e.g. mobile television to the mass market. Incorporating scalable video codecs in the multicast networks may be of interest due to the character of the transmission, possibility of saving the radio resources using scalable video codecs and possibility of implementing interesting use cases in efficient way, e.g. charging according to the received quality.

Mobile TV may be or become one of the services provided over MBMS. As long as a user equipment, UE, is on the move, user may experience a gap in transmission caused by inter-cell handover, respectively a cell reselection in idle mode. Currently the streaming service continuity is not guaranteed while moving from one cell to another. Depending on the UE state (connected or idle), UE capabilities and MBMS transmission mode in both source and destination cell (point-to-point, point-to-multipoint, none), a service gap caused by handover/cell reselection may have a duration of up to several seconds. If during a cell reselection process UE changes the state from idle (because of point-to-multipoint reception) to Cell_DCH (because of point-to-point reception; DCH = dedicated channel), the MBMS reception can be halted for up to several seconds.

Moreover, if a UE enters a cell where no MBMS mode is switched on, e.g. only MBMS Control Channel, MCCH, channel is transmitted whereas no MBMS Traffic Channel, MTCH, is available, a delay time can increase accordingly because of radio bearer establishment. It can be annoying or cause information loss when experiencing a service gap every cell change.

In current 3GPP standards there is no mechanism of informing network nodes about SVC layers conveyed by the particular MBMS bearers.

### SUMMARY

In accordance with at least one or all of the embodiments, the invention provides an apparatus as defined in claim 1 or any one of the dependent apparatus claims. Further, a method is provided as defined in the independent method claims, or any one of the dependent method claims. In addition, a context is provided as defined in claim 7.

Embodiments provide the advantage of supporting seamless mobility. Only minor changes in the whole broadcast concept such as MBMS concept are sufficient. Since inter-cell cell reselection in case of broadcast mode is seamless the UE may receive at least the base layer constantly (without any drops of signal) during a cell reselection. MBMS performance is seriously improved because no annoying gaps occur during cell reselection.

In accordance with one or more embodiments of the invention, a method or apparatus may be configured to transmit or receive content of a broadcast or multicast service such as e.g. multimedia broadcast multicast service, MBMS, or other type of broadcast or multicast service. The apparatus may e.g. be adapted to broadcast a base layer of content of the broadcast service such as e.g. multimedia broadcast multicast service in a broadcast or multicast mode, or to receive a base layer of content in a broadcast or multicast mode. In an embodiment, the base layer may be transmitted in a broadcast or multicast mode using point-to-multipoint connection.

The method or apparatus may be configured to transmit or receive an enhancement layer, allowing higher quality of the content reproduction than the base layer. The enhancement layer may e.g. be transmitted or received in at least one or more or a point to point mode, a point to multipoint mode, an enhanced broadcast mode, a broadcast mode with counting allowed, a multicast mode, or other modes. Different mode levels may be provided, e.g. broadcast mode transmitted via multicast connection, etc.

In accordance with one or more embodiments, a method or apparatus may be configured to transmit or receive a base layer together with enhancement layer that are e.g. mapped onto at least one of: the same lower layer service, the same bearer, and the same transport as well as physical channel, etc. As an example, bearer and transport channels may be used for the base layer and enhancement layer.

In accordance with one or more of the embodiments of the invention, a computer program product is provided which comprise code means configured to carry out or implement the method as defined above or below, when run on a processor.

The computer program product may e.g. be embodied on a computer-readable medium.

Other objects, features and advantages of the invention will become apparent from the following description of embodiments of the invention.

### BRIEF DESCRIPTION OF DRAWINGS

Fig. 1 illustrates embodiments of a system and apparatuses in accordance with the invention;
Fig. 2 shows an embodiment configured in accordance with an implementation of the invention;
Fig. 3 illustrates an embodiment of a radio network controller in accordance with the invention; and
Fig. 4 shows an embodiment of a terminal configured in accordance with an implementation of the invention.

### DESCRIPTION OF EMBODIMENTS

In accordance with one, more or all of the embodiments, support for UE inter-cell mobility is provided using scalable video coding, SVC.

Generally, scalability makes the transmission of a stream with various sub-streams possible i.e. apart from the basic layer one or more additional layers may be sent which here are designated as enhancement layer(s). It is then possible e.g. to provide the users with streams having e.g. different bit rates in a very efficient way, compared e.g. to simulcast solutions.

In accordance with one, more or all of the embodiments of the invention, different ways of scalability can be applied to the e.g. video, audio, data or other content transmission so as to provide at least one of the base layer and enhancement layer(s). Main modes include one or more or all of: temporal; spatial; fidelity; object.

In case of temporal scalability the frame rate of the stream can be manipulated. More specifically, enhancement layers carry the information that makes the receiving of the video streams with higher frame rates possible. It can be applicable e.g. if some receivers in the network support only limited set of video frame rates or if some users can receive the enhancement layer (which may directly lead to increasing of frame rate) due to better radio conditions or paying for content with improved quality level for premium users.

Frame size may be changed when spatial scalability is employed. Fidelity scalability leads to the possibility of receiving the content with the same frame rate and size but with different quality, measured e.g. by means of signal to noise ratio, SNR. In case of object scalability various regions of interest are defined and received according to the configuration of the layers. Moreover, combined scalability (if more than one scalability mode is used) may be applied as well.

In accordance with one, more or all of the embodiments of the invention, different layers may be transmitted using the same physical as well as transport channel wherein the influence of implementing SVC in MBMS on mobility aspects is taken into consideration. Dynamic switching e.g. related to enhancement layer and dynamic mapping may be provided. No hierarchical modulation scheme is needed so that embodiments are applicable to e.g. GERAN, UTRAN, and other types or radio access. It is possible to use single transport and single physical channel in order to transmit the layers. Embodiments provide an efficient solution to the inter-cell mobility.

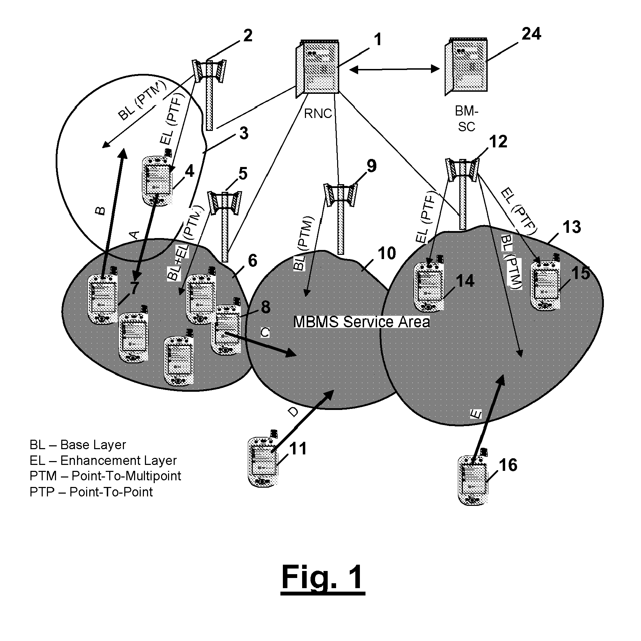

Fig. 1 illustrates an implementation of a system and apparatuses in accordance with one, more or all of the embodiments of the invention.

In the embodiment of Fig. 1, a radio network controller 1 is provided which is adapted to control one or more base stations such as the plurality of base stations 2, 5, 9, 12 shown in Fig. 1. The base stations 2, 5, 9, 12 may be of any type such as GSM base stations, nodeB, enhanced nodeB etc. The base stations 2, 5, 9, 12 define radio cells 3, 6, 10, 13 for receiving and transmitting signals via air, and for providing a MBMS service area.

As shown in the embodiment of Fig. 1, a plurality of terminals 4, 7, 8, 11, 14, 15, 16 such as user equipments or any other type of movable or stationary equipment providing services to a user, are present in the cells 2, 5, 9, 12.

In accordance with one, more or all of the embodiments of the invention, scalable video codecs, e.g. of scalable video coding SVC, are used in connection with MBMS broadcast/multicast characteristics to support for continuous inter-cell mobility.

In accordance with one, more or all of the embodiments of the invention, the SVC content, e.g. video content, may consist of e.g. two layers, a base layer, which may also be termed basic, base information, and an enhancement layer, which may also be termed enhancement information. In accordance with one, more or all of the embodiments of the invention, the base layer (basic information) may contain the broadcast/multicast content, e.g. video content, with one or more of e.g. low resolution (e.g. 176x144), low frame rate (e.g. 5 fps, frames per second), limited object availability (e.g. without background), leading to low bit rate and limited quality. The base layer may, in this embodiment, be transmitted using point-to-multipoint mode or may in accordance with another embodiment of the invention be transmitted using broadcast mode or a specific broadcast channel. The base layer is available constantly in the whole MBMS service area in this embodiment.

In accordance with one, more or all of the embodiments of the invention, the enhancement layer (enhancement information) may contain the content, e.g. video content, with at least one of higher resolution (e.g. 352x288), higher frame rate (e.g. 15 fps) and higher quality as compared with the base layer, or additional content and therefore better quality. In this embodiment the enhancement layer is sent using different logical channel than the one used for sending the base layer. The enhancement layer may employ enhanced broadcast mode, i.e. broadcast mode with counting allowed, or multicast mode. Common counting solutions can be applied according to one or more embodiments in order to switch on/off the enhancement layer together with switching between point-to-point and point-to-multipoint.

Network nodes are aware of correlation between different MBMS bearers which may be sent in parallel to the radio network controller, RNC, 1.

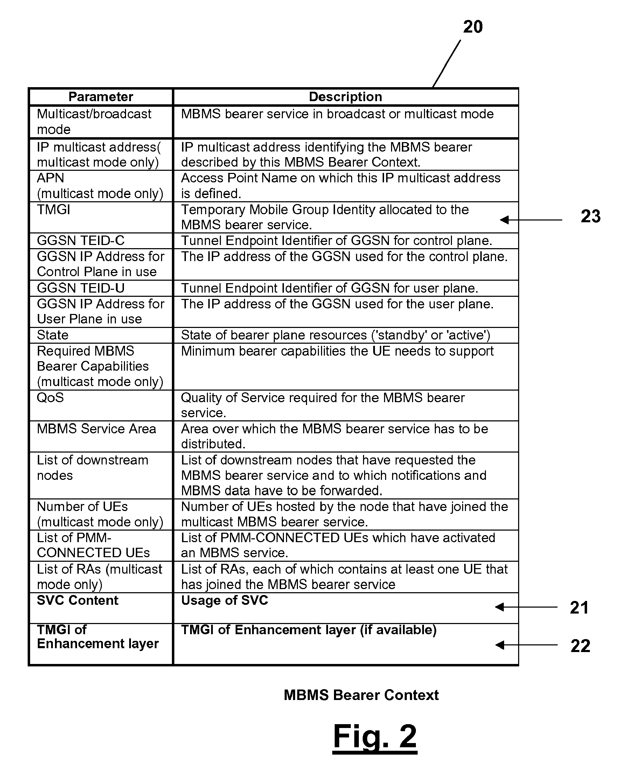

This information may be obtained e.g. from a modified MBMS bearer context as shown in Fig. 2. In the bearer context an optional indication may be included so as to indicate whether a content transmitted using a particular bearer is related to base or enhancement layer. If such an indication is inserted in the MBMS bearer context it may be presented together with the identifier of the bearer this bearer is connected with.

This modification of the bearer context is one of the features of one or more embodiments of the present invention and works e.g. in GPRS EDGE Radio Access Network, GERAN, as well as in universal mobile telecommunications system, UMTS, terrestrial radio access network, UTRAN, etc.

As an example, the base layer may be transmitted or received in broadcast mode or point-to-multipoint, p-t-m, transmission or reception. The enhancement layer may be transmitted or received in broadcast/multicast mode, p-t-m/p-t-p (point-to-point) transmission or reception, so there are several possibilities for sending or receiving enhancement layer:
broadcast p-t-m (traditional, pure broadcast mode),
broadcast p-t-p (due to the so called "enhanced broadcast" mode),
multicast p-t-p,
multicast p-t-m.

Then if p-t-m is chosen for enhancement layer, enhancement layer may be sent or received together with base layer using the same physical (and transport) channel.

The radio network controller, RNC, 1 may decide, e.g. basing on the (re-)counting results, about appropriate mode for the enhancement layer: 'none', point-to-point, point-to-multipoint. The counting may be performed separately for different bearers, for deciding on an appropriate mode for the enhancement layer.

If 'none' mode is chosen, only base layer is sent via air interface in accordance with one, more or all of the embodiments of the invention.
If point-to-point connection is chosen the enhancement layer is sent, in accordance with one, more or all of the embodiments of the invention, using dedicated connection to the interested UEs whereas base layer is still available in the broadcast mode using point-to-multipoint transmission. If point-to-multipoint mode is chosen, base layer together with enhancement layer are transmitted using the same transport (and further physical) channel and point-to-multipoint link, in accordance with one, more or all of the embodiments of the invention. The drawing of this embodiment illustrates whether PTP (point-to-point) or PTM (point-to-multipoint) is used.

Fig. 1 illustrates example embodiments of support for UE inter-cell mobility using SVC.

In case A, the terminal or user equipment, UE, 4 moves from cell 3, supplied by base station 2 or nodeB, to cell 6 as illustrated by arrow A. The terminal 4 thus changes from point-to-point, PtP, reception of enhancement layer "EL (PTP)" in cell 3, to point-to-multipoint mode for enhancement layer in cell 6 covered by base station 5 or node B, while base layer is transmitted with the help of point-to-multipoint transmission in both cells. EL stands for enhancement layer, BL for base layer.

In case B, the terminal or UE 7 changes from point-to-multipoint of cell 6 to point-to-point transmission for enhancement layer in cell 3, as shown by arrow B.

In case C, the terminal 8 moves from cell 6 to cell 10 supplied by base station 9 sending only the base layer BL, as shown by arrow C, and therefore changes from point-to-multipoint mode of cell 6 to 'none' for enhancement layer in cell 10.

In all cases A, B, C, the base layer BL is available at once after cell reselection without any need of additional establishment of radio resources, and in the whole MBMS service area.

Therefore, MBMS performance is not deteriorated due to inter-cell mobility issue.

Moreover, if a UE, e.g. UE 11, changes the cell from one where there is no MBMS transmission, to a cell, e.g. cell 10, in the MBMS Service Area the time needed to receive transmission is also reduced. The base layer content can be received immediately. Dedicated radio resources have to be established only in order to receive enhancement layer e.g. if in the new cell 10, 'none' mode is employed for transmission of the enhancement layer, as shown by arrow D (case D).

Likewise, for terminal 16 moving from a cell with no MBMS transmission, to a cell, e.g. cell 13, in the MBMS Service Area where point-to-point mode is employed in order to transmit enhancement layer, the time needed to receive transmission is also reduced. Dedicated radio resources have to be established only in order to receive enhancement layer (case E).

In accordance with one or more of the embodiments of the invention, a use case is streaming services such as MBMS mobile TV streaming services. From the user point of view the video transmission (e.g. watching TV channel) is continuous regardless of mobility. The video quality may perhaps decrease during handover/cell reselection but no service gap will occur.

Network nodes are aware of correlation between different MBMS bearers which are sent in parallel to the RNC. The above information may be obtained from modified MBMS bearer context and provides information to the RNC 1 about additional enhancement layers in addition to the actual MBMS bearer carrying the base layer of the SVC. Based on this information the RNC 1 can optimize the distribution of enhancement layers to different UEs over different base stations such as nodes B to optimize overall performance.

In the embodiment of Fig. 2, a possible implementation of changes of the MBMS Bearer Context is shown. As shown in Fig. 2, in accordance with one, more or all of the embodiments of the invention, a MBMS bearer context 20 may be changed by introducing at least one or more such as two additional fields 21. 22.

A first field 21, 'Usage of SVC', indicates whether the content conveyed by the given MBMS Bearer, e.g. defined by bearer context 20, is coded using SVC. Due to the character of the information, the field 21 may consist of only one bit, the bit value "1" indicating coding using SVC, and "0" no SVC coding, or vice versa.

A second field 22, 'TMGI of enhancement layer', is optional and may be introduced if 'Usage of SVC' field 21 indicates SVC content, if TMGI of enhancement layer is available, and/or if the conveyed layer is base one. In the 'TMGI of enhancement layer' field 22, an identity such as a temporary mobile group identity, TMGI, of the enhancement layer connected with the base layer will be stored.

The field length of field 22 may be the same as the length of a TMGI field 23 in the already standardized MBMS Bearer Context. The TMGI of field 23 indicates the temporary mobile group identity allocated to the MBMS bearer service.

General MBMS bearer context configuration e.g. of context 20 may be done in a broadcast multicast service center, BM-SC 24 shown in Fig. 1. The center 24 is able to communicate with the RNC 1, and other devices or components such as support nodes, gateways etc, as illustrated in Fig. 1 by the double-headed arrow between the center 24 and the RNC 1.

Thus, only minor changes are sufficient in the RNC 1 according to one or more embodiments. One or more or all of the above advantages can be achieved with the help of only minor modification of MBMS Bearer Context 20.

Embodiments of the invention are able to reduce or remove a service gap caused e.g. by handover/cell reselection.

E.g. during the MBMS activation of the service (in case of multicast) or MBMS session start (in case of broadcast and enhanced broadcast mode), the RNC 1 receives, e.g. from broadcast multicast service center, BM-SC 24, all bearer contexts 20 it needs to establish and maintain MBMS links properly. Since the information related to the correlation between bearers is included in the MBMS bearer context 20, RNC 1 can always map base layer BL and enhancement layer EL onto the same transport and physical channel if the point-to-multipoint mode is chosen for the enhancement layer. If point-to-point mode is chosen, in accordance with one or more embodiments of the invention, the base layer is still available via multicast link, and enhancement layer is transmitted to the interested UEs using dedicated resources. Besides this specific mapping in the point-to-multipoint mode, RNC 1 treats the bearers separately so the counting procedure is applied only to the enhancement layer (base layer is served using broadcast mode and point-to-multipoint transmission constantly) and the radio resources are used in an efficient way.

Embodiments provide the advantage of supporting seamless mobility with the help of only minor changes in the whole MBMS concept. Since inter-cell cell reselection in case of broadcast mode is always seamless the UE receives at least the base layer constantly (without any drops of signal) during the cell reselection. Concerning enhancement layer some disturbances (up to several seconds) could occur. Yet, MBMS performance is seriously increased because no annoying gaps occur during cell reselection.

Only minor changes are needed in the RNC 1 since first of all it does not need to extract the video layers, so it has not to be aware of SVC layers. It should be aware only of correlation between different bearers that convey information related to the same stream. This can e.g. be achieved with the help of minor modification of MBMS Bearer Context. Moreover, if point-to-multipoint mode is chosen for enhancement layer, implementing of embodiments of the apparatus or method does not lead to any necessity of extending minimum number of either physical channels or transport channels the UE has to receive (3GPP 25.306) since layers can be transmitted using the single transport and single physical channel.
In one or more embodiments of the invention it is assumed that the terminal supporting SVC is also able to receive point-to-multipoint transmission being in the CELL_DCH state if point-to-point mode is chosen for enhancement layer.

In accordance with one or more embodiments of the invention concerning an application to Mobile TV, the base layer is served using the lowest, acceptable bit rate, e.g. 32 or 64 kbps, and all remaining part of the whole content is sent using enhancement layer.

In the embodiment of Figs. 1, 2, an implementation relating to UTRAN is presented. The invention is also applicable to any other types of terminals, communication systems and networks such as e.g. access networks of GPRS EDGE radio access network, GERAN.

In case one or more embodiments of the invention are applied to 3G, a radio network controller, RNC, may implement the described mechanism, method or structure. In other or further evolution or networks, this mechanism may also be implemented in a base station, a gateway such as an access gateway, a nodeB or other network node or apparatus. A nodeB or BTSs may in some embodiments not be aware of the transmitted content.

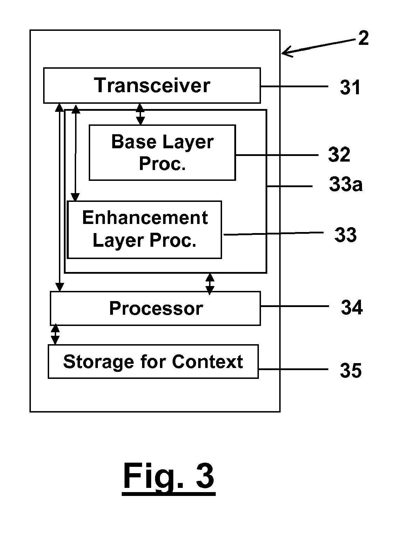

Fig. 3 shows an embodiment of a radio network controller 1 in accordance with an implementation of the invention. The radio network controller 1 comprises a transceiver 31 for transmitting and receiving layered content from e.g. the BM-SC 24 to e.g. the terminal 4 via base station 2, a processing means 33a for processing or preparing the base layer signal or enhancement layer signal or base layer together with enhancement layer signal e.g. as described above or below, a processor 34 for controlling one or more of the components or modules of the radio network controller 2 such as 31, 32, and a storage 35 for storing content or e.g. part or all of the MBMS bearer context. The division between base layer generation or processing 32 and enhancement layer generation or processing 33, as shown in block 33a, is virtual since nodeB or BTS may not be aware of the actual content. Moreover it may occur that both BL and EL are present in the same physical channel according to decision of the radio network controller, RNC. Block 33a illustrates that enhanced layer and basic layer can be processed together.

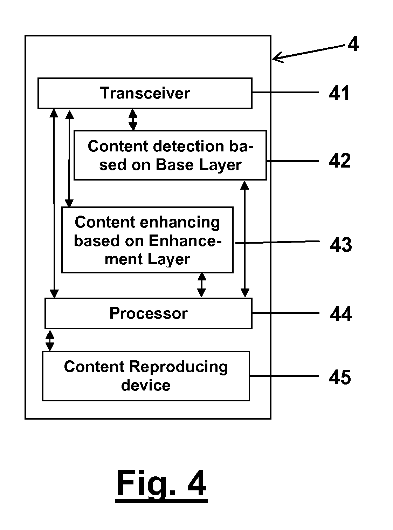

Fig. 4 illustrates an embodiment of a terminal, e.g. terminal 4, in accordance with the invention. The terminal 4 comprises a transceiver 41 for transmitting and receiving signals to and from e.g. a base station, a content detection or generation means or module 42 for content detection or generation based on the received base layer, a content detection or generation means or module 43 for content enhancement based on the received enhancement layer, a processor 44 for signal processing and/or controlling one or more of the components of Fig. 4 or of the terminal 4, and a reproducing device, module or means 45 such as a display for reproducing the content, e.g. television, film, audio etc.

In accordance with at least one or more embodiments of the invention, an apparatus is configured to transmit or receive content of a multimedia broadcast multicast service, adapted to broadcast a base layer of content of the multimedia broadcast multicast service in a broadcast mode, or to receive a base layer of content in a broadcast mode.

The apparatus may be configured to transmit or receive an enhancement layer, allowing higher quality of the content reproduction than the base layer, in a point to point mode, a point to multipoint mode, an enhanced broadcast mode, a broadcast mode with counting allowed, or a multicast mode.

The apparatus may e.g. be a base station, or part of a base station, radio network controller, a module or chipset, a stationary, portable or movable terminal, a user equipment, etc.

The apparatus may e.g. support scalable video coding, wherein the base layer may be provided constantly in a multimedia broadcast multicast service area covering two or more cells of a network such as cellular network or mobile network.

The cellular network may e.g. be a mobile cellular network.

The content transmitted or received by the MBMS may be a streaming content such as a video streaming content.

In accordance with one, more or all of the embodiments of the invention, a multimedia broadcast multicast service bearer context is provided which comprises at least one of a first field indicating whether a content conveyed by a multimedia broadcast multicast service bearer is coded using scalable video coding, SVC, and a second field optionally indicating an identity of an enhancement layer.

In such a context, the second field may be at least one, more, in any arbitrary combination, or all of: being optional; being introduced if the first field indicates SVC content; indicating a temporary mobile group identity of the enhancement layer connected with the base layer; or having a field length which is the same as the length of a field of the context indicating a temporary mobile group identity allocated to the multimedia broadcast multicast service bearer service.

The first field may consist of one bit but may also have more than one bit in other embodiments.

The context may be stored in at least one, more, in any arbitrary combination, or all of: a broadcast multicast service center, a radio network controller, a gateway, base station, and/or other entities.

In accordance with one or more embodiments of the invention, a method for transmitting or receiving content of a multimedia broadcast multicast service is provided wherein a base layer of content of the multimedia broadcast multicast service is broadcast in a broadcast mode. An enhancement layer allowing higher quality of the content reproduction than the base layer, may e.g. be transmitted or received in a point to point mode, a point to multipoint mode, an enhanced broadcast mode, a broadcast mode with counting allowed, or a multicast mode.

The method may be implemented in, or carried out by, at least one or more of a base station, or part of a base station, a module or chipset, a terminal, or a user equipment.

The method may e.g. support scalable video coding. The base layer may e.g. be provided constantly in a multimedia broadcast multicast service area covering two or more cells.

In accordance with one or more embodiments of the invention, an inter-cell handover/cell reselection may be performed by a terminal or user equipment, and content is continuously received and/or reproduced by the terminal or user equipment during handover/cell reselection based on the base layer content.

In such a method, a multimedia broadcast multicast service bearer context may e.g. comprise at least one of a first field indicating whether a content conveyed by a given multimedia broadcast multicast service bearer is coded using scalable video coding, SVC, and a second field. The second field may be at least one of: indicating an identity of an enhancement layer; optional; introduced if the first field indicates SVC content; indicates a temporary mobile group identity of the enhancement layer connected with the base layer; having a field length which is the same as the length of a field of the context indicating a temporary mobile group identity allocated to the multimedia broadcast multicast service bearer service.

In accordance with one or more embodiments of the invention, a computer program product is provided which comprises code means configured to carry out or implement, when run on a processor, a method as mentioned above.

The computer program product may e.g. be stored on a computer-readable medium such as data carrier like a compact disc, DVD, etc, or may be provided by download etc.

Embodiments provide a method and apparatus configured to provide or receive a broadcast or multicast service, wherein a base layer of content is broadcast or multicast in a broadcast or multicast mode using point-to-multipoint transmission, and an enhancement layer, allowing higher quality of the content reproduction than the base layer, may be provided in a point to point mode or together with base layer in a point to multipoint mode.

For the purpose of the present invention as described herein above, it should be noted that any access or network technology may be used which may be any technology by means of which a user equipment can access a network. The network may be any device, unit or means by which a mobile or stationary entity or other user equipment may connect to and/or utilize services offered by the network. Such services may include, among others, data and/or (audio-) visual communication, data download etc.

Generally, the present invention is also applicable in those network/terminal environments relying on a data packet based transmission scheme according to which data are transmitted in data packets and which are for example based on the Internet Protocol IP. The present invention is, however, not limited thereto, and any other present or future IP or mobile IP version, or, more generally, a protocol following similar principles is also applicable.

The user equipment entity may be any device, unit or means by which a system user may experience services from a network.

The sequence of method steps described above or shown in the drawings can be implemented in any other sequence arbitrarily deviating from the above described or shown sequence of steps. Further, the method, apparatuses and devices, may include only one, more or all of the features described above or shown in the drawings, in any arbitrary combination. The method steps may be implemented as software code portions and be run using a processor at a network element or terminal, can be software code independent, or can be specified using any known or future developed programming language as long as the functionality defined by the method steps is preserved. Generally, any method step is suitable to be implemented as software or by hardware without changing the idea of the present invention in terms of the functionality implemented. Devices, apparatus, units, or means, and/or method steps may be implemented as hardware components of a stationary or mobile station, or a terminal, or a network element, or part, or chipset, or module thereof, which part, or chipset, or module e.g. be used for an apparatus; may be hardware independent; and may be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. Devices, apparatus, units or means (e.g. User equipment, CSCF) can be implemented as individual devices, units, means, chipsets, modules, or part of devices, and may also be implemented in a distributed fashion throughout a system, as long as the functionality of the device, unit or means is preserved.

### List of abbreviations

- DIA: - Digital Item Adaptation
- FACH: - Forward Access Channel
- GERAN: - GPRS EDGE Radio Access Network
- GGSN: - Gateway GPRS Support Node
- GSM: - Global System for Mobile communication
- IP: - Internet Protocol
- IPTV: - Internet Protocol Television
- LTE: - Long Term Evolution
- MBMS: - Multimedia Broadcast Multicast Service
- MPEG: - Motion Picture Experts Group
- MTCH: - MBMS Traffic Channel
- QoS: - Quality of Service
- RNC: - Radio Network Controller
- S-CCPCH: - Secondary Common Control Physical Channel
- SGSN: - Serving GPRS Support Node
- SNR: - Signal to Noise Ratio
- SVC: - Scalable Video Coding
- TMGI: - Temporary Mobile Group Identity
- UMTS: - Universal Mobile Telecommunications System
- UTRAN: - UMTS Terrestrial Radio Access Network
- WLAN: - Wireless Local Area Network

## Claims

1. An apparatus configured to transmit or receive content of a broadcast or multicast service adapted to broadcast or multicast a base layer of content in a broadcast or multicast mode, or to receive a base layer of content in a broadcast or multicast mode.

2. An apparatus according to claim 1, configured to transmit or receive the base layer in a broadcast or multicast mode using point-to-multipoint connection.

3. An apparatus according to claim 1 or 2, configured to transmit or receive an enhancement layer, allowing higher quality of the content reproduction than the base layer.

4. An apparatus according to claim 1, 2 or 3, configured to transmit or receive base layer together with enhancement layer that are mapped onto at least one of: the same lower layer service, the same bearer, and the same transport as well as physical channel.

5. An apparatus according to any one of the preceding claims, wherein the apparatus is a base station, or part of a base station, a radio network controller, or a part of a radio network controller, a module or chipset, a terminal, a user equipment.

6. An apparatus in accordance with any one of the preceding claims, supporting scalable video coding, wherein the base layer is provided constantly in a multimedia broadcast multicast service area covering two or more cells of a cellular network such as a mobile network, and wherein the content is a streaming content such as a video streaming content.

7. Broadcast and/or multicast service bearer context, comprising at least one of:
a first field indicating whether a content conveyed by a given multimedia broadcast and/or multicast service bearer is coded using scalable video coding, SVC, and
a second field indicating an identity of an enhancement layer.

8. A context according to claim 7, wherein the second field is at least one of: optional; introduced if the first field indicates SVC content; indicates a temporary mobile group identity of the enhancement layer connected with the base layer; having a field length which is the same as the length of a field of the context indicating a temporary mobile group identity allocated to the broadcast and/or multicast service bearer service.

9. A context according to claim 7 or 8, wherein the first field consists of one bit.

10. A context according to claim 7, 8, or 9, wherein the context is stored in a broadcast or multicast service center, a radio network controller, a gateway or base station.

11. A method for transmitting or receiving content of a broadcast or multicast service, wherein a base layer of content of the broadcast or multicast service is broadcast or multicast in a broadcast or multicast mode using point-to-multipoint transmission.

12. A method according to claim 11, wherein an enhancement layer allowing higher quality of the content reproduction than the base layer, is transmitted or received in a point to point mode or together with base layer in a point to multipoint mode.

13. A method according to claim 12, wherein base layer together with enhancement layer is transmitted or received, wherein the base layer together with the enhancement layer are mapped onto at least one of:
the same lower layer service,
the same bearer, and
the same transport as well as physical channel,.

14. A method according to claim 11, 12, or 13, wherein the method is implemented in or carried out by a base station, or part of a base station, radio network controller, a module or chipset, a terminal, or a user equipment.

15. A method in accordance with any one of claims 11 to 14, supporting scalable video coding, wherein the base layer is provided constantly in a multimedia broadcast multicast service area covering two or more cells.

16. A method according to any one of claims 11 to 15, wherein an inter-cell handover/cell reselection is performed by a terminal or user equipment, and content is continuously received and reproduced by the terminal or user equipment during handover/cell reselection based on the base layer content.

17. A method according to any one of claims 11 to 16, wherein a broadcast or multicast service bearer context comprises at least one of a first field indicating whether a content conveyed by a given broadcast or multicast service bearer is coded using scalable video coding, SVC, and a second field, wherein the second field is at least one of: indicating an identity of an enhancement layer; optional; introduced if the first field indicates SVC content; indicates a temporary mobile group identity of the enhancement layer connected with the base layer; having a field length which is the same as the length of a field of the context indicating a temporary mobile group identity allocated to the broadcast or multicast service bearer service.

18. Computer program product, comprising code means configured to carry out or implement, when run on a processor, a method in accordance with any one of claims 11 to 17.
